(19) Europäisches Patentamt
European Patent Office
Office européen des brevets

(11) **EP 2 890 107 A1**

(12) **EUROPEAN PATENT APPLICATION**

(43) Date of publication:
**01.07.2015 Bulletin 2015/27**

(51) Int Cl.:
*H04N 1/60* (2006.01)

(21) Application number: **13306869.2**

(22) Date of filing: **26.12.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Stauder, Jurgen
35576 CESSON-SÉVIGNÉ (FR)**

• **Blondé, Laurent
35576 CESSON-SÉVIGNÉ (FR)**
• **Morvan, Patrick
35576 CESSON-SÉVIGNÉ (FR)**

(74) Representative: **Huchet, Anne et al
Technicolor
1, rue Jeanne d'Arc
92443 Issy-les-Moulineaux Cedex (FR)**

(54) **Method of mapping source colors of images of a video content into the target color gamut of a target color device**

(57) According to the invention, the mapping operations are subdivided into two main steps : first, a content-dependent mapping of colors from a source content color gamut into an intermediate color gamut which is common to all images to map, and second, a device-dependent mapping of colors from this intermediate color gamut into the target color gamut.

Fig.3

EP 2 890 107 A1

# Description

## Technical Field

The invention concerns a method for color gamut mapping colors from a source content dependent color gamut in a target color gamut. Such an operation is called **"content-to-device gamut mapping"**.

## Background Art

Gamut mapping of colors of an image has the goal that the mapped colors are inside of the color gamut of a target display device. A second goal is that the mapped colors make efficient and complete use of the color gamut of the target display device. In general, color gamut mapping can be applied to any color values that are defined within a source color gamut in order to transform them such that they are included in a destination color gamut. The source color gamut can be linked to an image capture device such as camera or scanner. It can be linked to a reference display device such as a proof view display device used to control the creation or color processing of images. It can also be linked to a predefined, virtual color gamut as defined for instance in a standard such as ITU-R BT.709. The target color gamut can be linked to a specific reproduction display device. It can be linked also to a predefined gamut for transmission, compression or storage purpose. For example, it can be linked to a predefined, virtual color gamut as defined for instance in a standard such as ITU-R BT.2020. It can be linked to a specific medium such as film or paper prints. In the following we will simplify by talking about a source display device having a source gamut and a target display device having a target color gamut.

Color gamut mapping is carried out usually in specific color spaces. Some methods use the L*a*b* color space defined by the CIE in 1976. In L*a*b* space, a constant angle in a*b* plane is assumed to correspond to identically perceived hue. The L coordinate represents the perceived intensity. Unfortunately, this space was shown to not well represent hues, notably in blue tones. Other methods use the JCh space defined in the CIECAM-02 standard defined by the CIE in 2002. In JCh space, the h coordinate is assumed to correspond to perceived hue by the human eye and the J coordinate is assumed to correspond to perceived intensity. JCh space was shown to better represent hues and intensity than L*a*b*, but it requires higher complexity to be calculated.

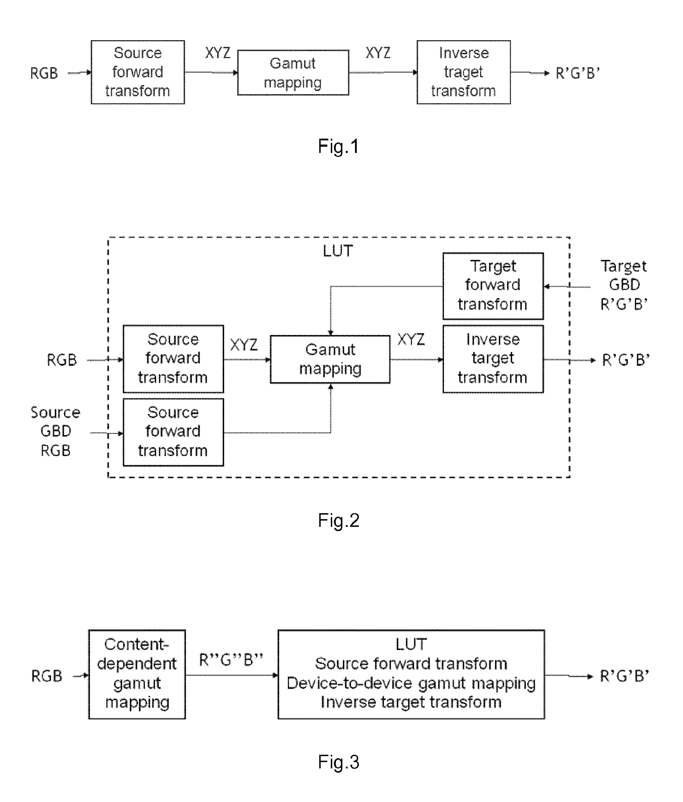

When doing gamut mapping in L*a*b* color space, the classical approach is shown in figure 1. First, a source forward transform transforms device dependent color coordinates representing the colors of an image in a device-dependent color space, for example R,G,B in the "RGB" color space, into device-independent color coordinates in a device-independent color space, for example X,Y,Z in the "XYZ" color space. Then, color gamut mapping can be applied to the XYZ coordinates since L*a*b* coordinates can be derived from and transformed into XYZ coordinates by a fixed formula standardized in 1987 by the CIE. After gamut mapping, the mapped device independent color coordinates are usually transformed back into device dependent color coordinates.

The article entitled "Color reproduction system based on color appearance model and gamut mapping", from Fang-Hsuan GHENG et al., published in 2000 in the Proceedings of SPIE, Vol. 4080, pages 167-178, discloses a typical gamut mapping scheme using the JCh color space instead of the L*a*b* color space.

A problem addressed by this invention is the increased computational load which is required when colors should be mapped as described above in a device-independent color space. This problem is confirmed by Dong-Woo Kang et. al. in their publication entitled "COLOR DECOMPOSITION METHOD FOR MULTIPRIMARY DISPLAY USING 3D-LUT IN LINEARIZED LAB SPACE" published in the Proceedings of the SPIE vol.5667 no.1 pages 354-63. The authors maintain the transformation of color coordinates back from and forward into device independent color space but use - instead of the non-linear L*a*b* color space - a linearized device independent color space such that the color transformation of color coordinates is less heavy in computation.

Another solution to this problem of increased computational load is to establish a 3D Look-Up-Table (LUT) mapping directly device-dependent coordinates into other, mapped device-dependent coordinates. For this solution, the three processing steps such as shown in figure 1 are pre-concatenated and pre-calculated into one LUT which is then used to map color coordinates of an image. If the mapping operation by itself is fast due to the application of only one LUT, the pre-calculation of the concatenated LUT is slow. One reason for the LUT calculation being slow is that, as shown above, the device-dependent color coordinates defining a color to map, for example RGB, needs to be transformed, before mapping, into device-independent color coordinates, for example XYZ or Lab, as specified notably by the CIE.

A second problem addressed by this invention is when the gamut mapping operator depends on metadata, as for instance described in US2010-220237. If the metadata change, the mapping operator needs to be updated or recalculated, which is usually slow. If the update is slow, the frequency of update is limited. Changing metadata can be processed only in the frequency of updates of the mapping operator, so finally, the frequency of changes in the metadata is limited. As shown in figure 2, typical metadata for classical color gamut mapping is the gamut boundary descriptions (GBD) of the source color gamut and of the target color gamut.

In a first application of such a color gamut mapping, the source GBD describes the color gamut of a source display device that is capable to reproduce colors from RGB color coordinates used to control it. The target GBD describes the color gamut of a target display device that is capable to reproduce colors from R'G'B' co-ordinates used to control it. The GBD of the target color gamut depends for instance on the settings of the target display device and/or on the viewing conditions. In this case, the goal of classical color gamut mapping is to map the colors that can be reproduced by the source display device into the color gamut of the target display device. This operation is called **device-to-device color gamut mapping.** Often, the color gamut of the target display device is smaller than the gamut of the source display device. One may then call this operation gamut compression. The inverse case is called gamut expansion. Both cases may apply at the same time if the color gamut of the target display device is smaller than the color gamut of the source display device for colors with certain hue, luminance or saturation but is larger for other colors.

In a second application of such a color gamut mapping, the source GBD describes the color gamut of the source content instead of the color gamut of the source display device. The source content color gamut is usually smaller than the source device color gamut, if it the content was produced using the source device. The source content color gamut may be larger than the source device color gamut, if the content was produced using other devices. In these cases, the goal of classical color gamut mapping is to map the colors of the source content into the color gamut of the target display device. This operation is called **content-to-device gamut mapping.** The source GBD might change if the color characteristics of the content change. In this case, the color mapping operator needs to be updated. For example, a new LUT may be calculated for every scene of a film. Since this update is usually slow, the frequency of change of the source GBD is usually be limited.

Summary of invention

The invention concerns a method for content-dependent color gamut mapping of colors from a source content color gamut into a target color gamut. This invention concerns notably "content-to-device gamut mapping".

The color mapping method of the invention as illustrated on figure 3 changes the order of operations with respect to the prior art as illustrated on figure 1. According to the invention, the mapping operation is subdivided into two main steps : first, a so-called content-dependent mapping of colors from the source content color gamut into an intermediate color gamut which is common to all images to map, and second, a so-called device-dependent mapping of colors from this intermediate color gamut into the target color gamut. In the first step, content-dependent gamut mapping is applied directly to the incoming RGB color coordinates resulting into intermediately-mapped color coordinates R"G"B". In a second step, these intermediately-mapped coordinates are transformed into final target color coordinates R'G'B', using classical steps such as, as detailed below, source device forward transform, source device to target device gamut mapping and inverse target device transform.

For the purpose of solving the aforementioned problems, the subject of the invention is notably a method of mapping source colors of images of a video content into the target color gamut of a target color device thus resulting in target colors,
wherein a single intermediate color gamut is defined for the whole video content,
wherein said images are grouped into a plurality of groups, each group comprising at least one image,
said gamut mapping method comprising, for each group of images, the step of defining a source content-dependent color gamut as including all source colors of images of this group,
and for each source color of image(s) of this group, the steps of:

> 1/ mapping said source color from said source content-dependent color gamut into said intermediate color gamut, resulting in an intermediate color,
> 2/ mapping said intermediate color from said intermediate color gamut into said target gamut, resulting in a target color.

An intermediate color space is generally associated with the definition of this intermediate color gamut. Preferably, this intermediate color space is the color space in which the source colors to map are represented. These source colors are generally represented by RGB color coordinates. This intermediate color space is then device-dependent.

Preferably:

> said definitions of source content-dependent color gamuts are performed in an intermediate device-dependent color space,
> an intermediate-device forward model is defined such as to be able to transform color coordinates representing any source colors in said intermediate device-dependent color space into color coordinates representing approximately the same color in a device-independent color space,
> the target color device is modeled by a target inverse transform which is defined to be able to transform color coordinates representing a color in the device-independent color space into color coordinates representing approximately the same color in a target device-dependent color space, and
> the mapping of said intermediate color from said intermediate color gamut into said target gamut comprises the following steps:

> -  applying said intermediate-device forward model to color coordinates representing said intermediate color in said intermediate device-dependent color space in order to get the color coordinates representing approximately this intermediate color in the device-independent color space;

- in said device-independent color space, mapping said intermediate color from said intermediate color gamut into said target gamut, resulting in said target color,

- applying the inverse color transform to the color coordinates representing approximately this target color in the device-independent color space in order to get the color coordinates of this target color in said target device-dependent color space.

Preferably, the shape of the intermediate color gamut is an hyper cube when defined in the intermediate color-dependent color space.

The method according the invention may have notably the following advantages with respect to classical color gamut mapping:

- As opposed to prior art gamut mapping, color coordinates of the source colors to map do not need to be transformed into device independent color coordinates, thus complexity and computational load is reduced;

- As opposed to prior art gamut mapping, metadata such as the *coundary* of a source content dependent color gamut does not need to be transformed into device independent color coordinates, thus complexity and computational load is reduced;

- As opposed to prior art gamut mapping, when the source content dependent color gamut boundary changes, for instance from one scene to another scene of a video content, the proposed color gamut mapping operator can be updated without updating the whole classical color management chain of the color mapping. The update is then less complex and computational load is reduced;

- Source content-dependent and device-dependent gamut mapping are separated allowing to not transforming the target color gamut boundary into device dependent color coordinates of the source device and thus complexity and computational load is further reduced;

- Makes able to use a classical, device dependent color management Color Look Up Table from an existing, device dependent gamut mapping workflow and extend it with low computational complexity to a source content-dependent color gamut mapping workflow.

The subject of the invention is also a color mapper for mapping source colors of images of a video content into the target color gamut of a target color device thus resulting in target colors, wherein said images are grouped into a plurality of groups, each group comprising at least one image, said color mapper being configured:

to define a single intermediate color gamut for the whole video content,

to define, for each group of images, a source content-dependent color gamut as including all source colors of images of this group,

to map each source color of image(s) of this group from said source content-dependent color gamut into said intermediate color gamut, resulting in an intermediate color,

and to map said intermediate color from said intermediate color gamut into said target gamut, resulting in a target color.

Brief description of drawings

The invention will be more clearly understood on reading the description which follows, given by way of non-limiting example and with reference to the appended figures in which:

- Figure 1, already mentioned, illustrates a mapping method according to the prior art,

- Figure 2, already mentioned, corresponds to the mapping method of figure 1 where the color gamut descriptors used to build the mapping operator are illustrated as based on the prior art,

- Figure 3, already mentioned, illustrates a main embodiment of the mapping method according to the invention,

- Figure 4 illustrates the first mapping step of the mapping method of this main embodiment,

- Figure 5 illustrates the second mapping step of the mapping method of this main embodiment,

- Figure 6 illustrates a preferred implementation of the main embodiment of figure 3,

- Figure 7 illustrate an example of implementation of the embodiment of figure 6.

Description of embodiments

The functions of the various elements shown in the figures may be provided through the use of a color mapper comprising dedicated hardware as well as hardware capable of executing software in association with appropriate software. Such hardware may notably include, without limitation, digital signal processor ("DSP"), read-only memory ("ROM") for storing software, random access memory ("RAM"), and non-volatile storage. Such a color mapper may be called "color box".

The invention will now be described in the context of mapping colors of images of a video content such that these images can be reproduced with the best color quality using a specific target color device, such as a TV set, a color monitor, a color projector or the display of any mobile device. The colors of the pixels of each image to reproduce are called "source colors". The target color device has its own target color gamut, which is, of course, device-dependent.

Images of this video content are grouped into groups of at least one image. In each group comprising a plurality of images, those images are temporally adjacent, i.e. successive. A group of images may notably correspond to a scene of this video content. Another possibility is that each group comprises only one image.

From the source colors of images of each group, a source color gamut is defined as enclosing all source colors of these images. This source color gamut is therefore content-dependent. Each group has then its specific source content-dependent color gamut. When a group corresponds to a scene, the corresponding source content-dependent color gamut corresponds to the content gamut of this scene.

An intermediate color gamut that does not change through the whole video content is defined. This intermediate color gamut does not change from one group of images to another one. Preferably, the shape of this intermediate color gamut is a cube. Such a shape has the advantage of being very easy to use for the implementation of the mapping method according to the invention. An intermediate color space is associated to the definition of this intermediate color gamut. Preferably, this intermediate color space is the color space in which the source colors to map are represented. These source colors are generally represented by RGB color coordinates. This intermediate color space is then device-dependent.

In a first series of preliminary steps of the method according to the invention for the mapping of source colors of images of a video content, the following operations are performed:

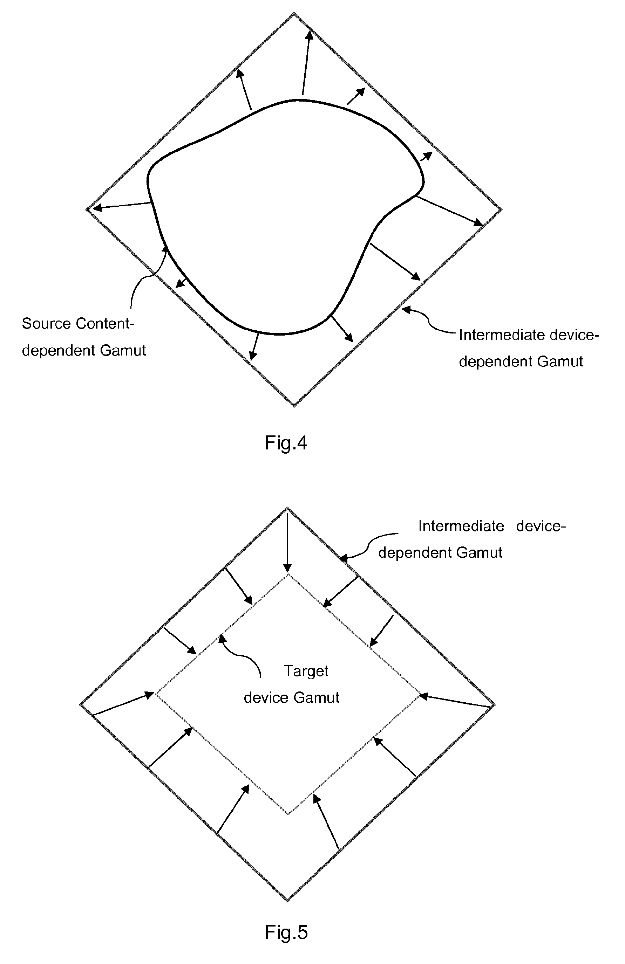

1. Defining a single intermediate color gamut for the whole video content and describing this intermediate color gamut in an intermediate device-dependent color space by an intermediate gamut boundary description;
2. Describing the target color gamut by a target gamut boundary description in the target device-dependent color space;
3. Defining an intermediate-device forward model such as to be able to transform color coordinates representing any source color in the intermediate device-dependent color space into color coordinates representing approximately the same color in the device-independent color space;
4. As illustrated on figure 5 by the straight arrows, defining a final gamut mapping operator able to map, notably in the device-independent color space, colors that are located inside the intermediate device-dependent gamut into colors inside the target device gamut;
5. Modeling the target color device such as to be able to transform color coordinates representing, in the device-independent color space, any color within the color gamut of this target device into color coordinates representing approximately the same color in the target device-dependent color space.

In a second series of preliminary steps of the method according to the invention, for each group of images of the video content to map, the following operations are performed:

1. Defining a source content-dependent color gamut enclosing all source colors of the images of this group; preferably, in the intermediate device-dependent color space, this source content-dependent color gamut is described by a source content-dependent gamut boundary description, as represented by color coordinates RGB;
2. As illustrated on figure 4 by the straight arrows, defining an intermediate gamut mapping operator able to map, in the intermediate device-dependent color space, colors of the images of this group that are located inside the source content-dependent gamut into colors inside the intermediate device-dependent gamut.

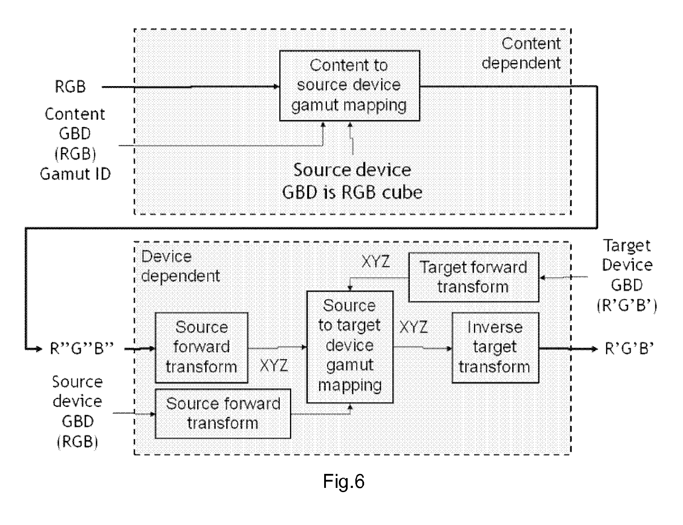

Then, for this group of images having its own source content-dependent color gamut and for each source color of the images of this group, the mapping method according to the invention is implemented according to the following four steps illustrated on figure 6:

1. Applying the intermediate gamut mapping operator to the source colors represented by color coordinates RGB in the intermediate device-dependent color space in order to get intermediate colors represented by color coordinates R"G"B" in the same color space;
2. Applying the forward color transform to color coordinates R"G"B" in order to get the color coordinates XYZ of these intermediate colors in the device-independent color space;
3. Applying the final gamut mapping operator to these the color coordinates XYZ in order to get color coordinates X'Y'Z' representing target colors in the device-independent color space;
4. Applying the inverse color transform to these color coordinates X'Y'Z' in order to get the color coordinates R'G'B' of these target colors in the target device-dependent color space.

Steps 2 to 4 above correspond to the mapping of the intermediate colors from the intermediate color gamut of a group of images into the target color gamut, resulting in these target colors as defined above. Other methods of mapping of the intermediate colors from the intermediate color gamut of a group of images into the target color gamut can be used without departing from the invention.

Preferably, all color transforms and color mapping operators are represented by Look Up Tables (LUT).

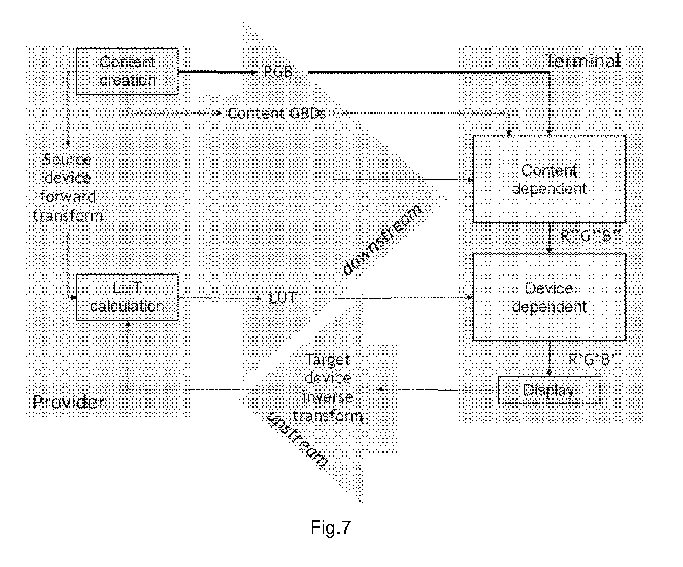

A specific example of the main embodiment above will now be described in reference to figures 6 and 7.

First, an intermediate device-dependent color gamut is chosen such that the boundary of this intermediate device-dependent color gamut is a three-dimensional cube in an intermediate device-dependent color space. A intermediate-device forward model is then inferred such that it can transform color coordinates representing any source color in the intermediate device-dependent color space into color coordinates representing approximately the same color in the device-independent color space, here the XYZ color space.

As described above, images of the video content to map are grouped into a plurality of groups.

Then, for each group, the mapping method is implemented in four steps similar to the four steps of the main embodiment above:

1. gamut mapping source colors in the intermediate device-dependent gamut, resulting in intermediate colors ; advantageously, this step is fast since this gamut is described by a cube that can be described by six faces, only;
2. Application of the Forward intermediate device model;
3. gamut mapping intermediate colors in the target gamut;
4. Application of the Inverse target device model.

Where the first step is fast in a RGB intermediate content-dependent color space, and ment to be reactive to dynamic metadata while the other three steps 2, 3, and 4 make use of a device independent color space and may be slower but without any drawback because, being not ment to be reactive to dynamic metadata, they can be precalculated, for instance into a LUT.

To implement the first step, we use as source content-dependent gamut boundary descriptions (GBD) the basic profile of the IEC 61966-12-1 "Gamut ID" format. Each GBD is described by 5 colors: red, green, blue, black, white. We build from this information six triangles that build together the boundary of a gamut:

• black-red-green;
• black-green-blue;
• black-blue-red;
• white-red-green;
• white-green-blue;
• white-blue-red.

The GBD for the intermediate device-dependent color gamut is simply the cube in source-device dependent RGB color space containing all valid RGB values. Preferably, the cube is limited in RGB color space by coordinates 0 and 255 in all three directions, R, G and B, as for a 8 bit display device.

Therefore, in this non-limiting example of the first step, any source color of the images of a same group, which is described by its source RGB coordinates, is mapped to an intermediate color having source R"G"B" coordinates by the following operations:

a) Projection of the source color $C = \begin{pmatrix} R \\ G \\ B \end{pmatrix}$ onto the

grey axis giving the anchor point $A$, the grey axis being the axis between the color (0,0,0) and the color (255,255,255).

b) Calculation of the intersection points $I_S$ and $I_T$ of the line going through C and A with the source and intermediate GBD, respectively;

c) Mapping all colors lying on the line section $\overline{A_{IS}}$ to the line section $\overline{A_{IT}}$, as so the color C becoming

mapped color $C'' = \begin{pmatrix} R'' \\ G'' \\ B'' \end{pmatrix}$.

Other, known gamut mapping algorithms might be used, such as algorithms using a single anchor point for all colors, or algorithms that map along curved lines instead of straight lines.

In the second step, as intermediate device model, we use the ITU-R BT.709 standard. Then, the application of the forward intermediate device model is performed according to the following two operations :

a) Transforming source RGB coordinates into linear source RGB coordinates:

$$R_{LIN} = \begin{cases} \dfrac{1}{4.5} R & 0 \le R < 0.081 \\ R^{1/0.45} & 0.081 \le R \le 1 \end{cases}$$

and equivalently for G and B;

b) Transforming linear source RGB coordinates into XYZ coordinates:

$$\begin{pmatrix} X \\ Y \\ Z \end{pmatrix} = \begin{pmatrix} 0.41 & 0.36 & 0.18 \\ 0.21 & 0.72 & 0.07 \\ 0.02 & 0.12 & 0.95 \end{pmatrix} \begin{pmatrix} R_{LIN} \\ G_{LIN} \\ B_{LIN} \end{pmatrix}$$

In the third step, any known gamut mapping method can be used. This step corresponds to the classical case of device-to-device color gamut mapping.

In the fourth step, we describe the inverse target device model by an ICC profile according to the standard ISO 15076-1:2005 entitled "Image technology colour management - Architecture, profile format and data structure- Part 1: Based on ICC.1:2004-10". If the target device display maker does not deliver the ICC profile, standard color characterization tools can be used to produce the ICC profile. In order to specify the target display device model, we will use colorimetric intent transforms of the ICC profile. For the inverse target device model, we use the colorimetric rendering intent transform B to A of the ICC profile.

In figure 7, a diagram illustrating this specific non-limiting example is shown. A content provider sends to a terminal a classical, fixed, pre-calculated color management LUT that the terminal applies to the content in a device-dependent operator. The source content-dependent gamut boundary description (GBD) is sent to the terminal and used by the terminal in a content-dependent operator. The GBD can be sent dynamically since the content-dependent operator is non complex and operates in the source device-dependent RGB space. For example, each time a new group of images (i.e. a scene) starts, a new source content-dependent GBD is sent.

The terminal sends once the target device inverse transform to the provider.

It is to be understood that the invention may be implemented in a color mapper implementing various forms of hardware, software, firmware, special purpose processors, or combinations thereof. The invention may be notably implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU and/or by a GPU. In addition, various other peripheral units may be connected to the computer platform such as an additional data storage unit and a printing unit.

While the present invention is described with respect to particular examples and preferred embodiments, it is understood that the present invention is not limited to these examples and embodiments. The present invention as claimed therefore includes variations from these embodiments described herein, as will be apparent to one of skill in the art.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function.

## Claims

1. Method of, in a color mapper, mapping source colors of images of a video content into the target color gamut of a target color device thus resulting in target colors,
wherein a single intermediate color gamut is defined for the whole video content,
wherein said images are grouped into a plurality of groups, each group comprising at least one image,
said gamut mapping method comprising, for each group of images, the step of defining a source content-dependent color gamut as including all source colors of images of this group,
and for each source color of image(s) of this group, the steps of :

   1/ mapping said source color from said source content-dependent color gamut into said intermediate color gamut, resulting in an intermediate color,
   2/ mapping said intermediate color from said intermediate color gamut into said target gamut, resulting in a target color.

2. Method according to claim 1,
wherein said definitions of source content-dependent color gamuts are performed in an intermediate device-dependent color space,
wherein an intermediate-device forward model is defined such as to be able to transform color coordinates representing any source colors in said intermediate device-dependent color space into color coordinates representing approximately the same color in a device-independent color space,
wherein the target color device is modeled by a target inverse transform which is defined to be able to transform color coordinates representing a color in the device-independent color space into color coordinates representing approximately the same color in a target device-dependent color space, and
wherein the mapping of said intermediate color from said intermediate color gamut into said target gamut comprises the following steps:

   - applying said intermediate-device forward model to color coordinates representing said intermediate color in said intermediate device-dependent color space in order to get the color coordinates representing approximately this intermediate color in the device-independent color space;
   - in said device-independent color space, mapping said intermediate color from said intermediate color gamut into said target gamut, resulting in said target color,

- applying the inverse color transform to the color coordinates representing approximately this target color in the device-independent color space in order to get the color coordinates of this target color in said target device-dependent color space.

3. Method according to claim 1 or 2 **characterized in that** the shape of said intermediate color gamut is an hyper cube when defined in said intermediate color-dependent color space.

4. Color mapper for mapping source colors of images of a video content into the target color gamut of a target color device thus resulting in target colors, wherein said images are grouped into a plurality of groups, each group comprising at least one image, said color mapper being configured:

to define a single intermediate color gamut for the whole video content,

to define, for each group of images, a source content-dependent color gamut as including all source colors of images of this group,

to map each source color of image(s) of this group from said source content-dependent color gamut into said intermediate color gamut, resulting in an intermediate color,

and to map said intermediate color from said intermediate color gamut into said target gamut, resulting in a target color.

5. Color mapper according to claim 4 being also configured :

to define source content-dependent color gamuts in an intermediate device-dependent color space,

to define an intermediate-device forward model such as to be able to transform color coordinates representing any source colors in said intermediate device-dependent color space into color coordinates representing approximately the same color in a device-independent color space,

to model said target color device is modeled by a target inverse transform which is defined to be able to transform color coordinates representing a color in the device-independent color space into color coordinates representing approximately the same color in a target device-dependent color space, and

to map each intermediate color from said intermediate color gamut into said target gamut according to the following steps :

- applying said intermediate-device forward model to color coordinates representing said intermediate color in said intermediate device-dependent color space in order to get the color coordinates representing approximately this intermediate color in the device-independent color space;

- in said device-independent color space, mapping said intermediate color from said intermediate color gamut into said target gamut, resulting in said target color,

- applying the inverse color transform to the color coordinates representing approximately this target color in the device-independent color space in order to get the color coordinates of this target color in said target device-dependent color space.

Fig.1

Fig.2

Fig.3

Source Content-
dependent Gamut

Intermediate device-
dependent Gamut

Fig.4

Intermediate device-
dependent Gamut

Target
device Gamut

Fig.5

Fig.6

Fig.7

Europäisches
Patentamt

European
Patent Office

Office européen
des brevets

# EUROPEAN SEARCH REPORT

Application Number

EP 13 30 6869

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 672 712 A1 (THOMSON LICENSING [FR]) 11 December 2013 (2013-12-11) * abstract *; figures 1-4 * | 1,4 | INV. H04N1/60 |
| A | EP 1 014 698 A1 (XEROX CORP [US]) 28 June 2000 (2000-06-28) * abstract *paragraphs 0001-0005,0019; figures 1-9 * | 1,4 | |
| A | BRAUN G J ET AL: "GAMUT MAPPING FOR PICTORIAL IMAGES", TAGA PROCEEDINGS, XX, XX, 1 January 1999 (1999-01-01), pages 645-660, XP008078676, * page 649, last paragraph - page 652 * | 1,4 | |
| A | US 2007/046958 A1 (HOOF HUBERT V [US] ET AL VAN HOOF HUBERT [US] ET AL) 1 March 2007 (2007-03-01) * abstract *; figures 4,5,9 * | 2,5 | |
| A | US 2004/105581 A1 (SAWADA TAKAYUKI [JP]) 3 June 2004 (2004-06-03) * abstract *paragraph 0116; figures 1-16 * | 1 | TECHNICAL FIELDS SEARCHED (IPC) H04N |
| A | US 2013/107292 A1 (KOEHL PHILIPPE [FR] ET AL) 2 May 2013 (2013-05-02) * abstract *; figures 1-6 * | 1,4 | |

The present search report has been drawn up for all claims

| Place of search | Date of completion of the search | Examiner |
|---|---|---|
| Berlin | 23 April 2014 | Kassow, Harald |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 13 30 6869

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2014

| Patent document cited in search report | | Publication date | Patent family member(s) | | Publication date |
|---|---|---|---|---|---|
| EP 2672712 | A1 | 11-12-2013 | NONE | | |
| EP 1014698 | A1 | 28-06-2000 | DE | 69918790 D1 | 26-08-2004 |
| | | | DE | 69918790 T2 | 13-01-2005 |
| | | | EP | 1014698 A1 | 28-06-2000 |
| | | | JP | 4234287 B2 | 04-03-2009 |
| | | | JP | 2000196864 A | 14-07-2000 |
| | | | US | 2001040998 A1 | 15-11-2001 |
| US 2007046958 | A1 | 01-03-2007 | AU | 2006284916 A1 | 08-03-2007 |
| | | | BR | PI0615103 A2 | 03-05-2011 |
| | | | CA | 2620841 A1 | 08-03-2007 |
| | | | CN | 101253762 A | 27-08-2008 |
| | | | EG | 25534 A | 06-02-2012 |
| | | | EP | 1920594 A1 | 14-05-2008 |
| | | | IL | 189421 A | 28-06-2012 |
| | | | JP | 5270346 B2 | 21-08-2013 |
| | | | JP | 2009506727 A | 12-02-2009 |
| | | | KR | 20080045150 A | 22-05-2008 |
| | | | NZ | 566043 A | 29-07-2011 |
| | | | NZ | 588477 A | 27-04-2012 |
| | | | US | 2007046958 A1 | 01-03-2007 |
| | | | US | 2011013833 A1 | 20-01-2011 |
| | | | WO | 2007027745 A1 | 08-03-2007 |
| | | | ZA | 200801889 A | 25-11-2009 |
| US 2004105581 | A1 | 03-06-2004 | JP | 2004180013 A | 24-06-2004 |
| | | | US | 2004105581 A1 | 03-06-2004 |
| US 2013107292 | A1 | 02-05-2013 | US | 2013107292 A1 | 02-05-2013 |
| | | | WO | 2013066719 A1 | 10-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010220237 A

**Non-patent literature cited in the description**

- **FANG-HSUAN GHENG et al.** Color reproduction system based on color appearance model and gamut mapping. *Proceedings of SPIE,* 2000, vol. 4080, 167-178

- COLOR DECOMPOSITION METHOD FOR MULTIPRIMARY DISPLAY USING 3D-LUT IN LINEARIZED LAB SPACE. *Proceedings of the SPIE,* vol. 5667 (1), 354-63